Europäisches Patentamt

European Patent Office

Office européen des brevets

(19)

(11) **EP 0 951 379 B1**

(12) **EUROPÄISCHE PATENTSCHRIFT**

(45) Veröffentlichungstag und Bekanntmachung des Hinweises auf die Patenterteilung:
**19.11.2003 Patentblatt 2003/47**

(21) Anmeldenummer: **98903990.4**

(22) Anmeldetag: **05.01.1998**

(51) Int Cl.[7]: **B29C 47/02**, B29C 47/06, B01D 69/06

(86) Internationale Anmeldenummer:
**PCT/DE98/00005**

(87) Internationale Veröffentlichungsnummer:
**WO 98/030379 (16.07.1998 Gazette 1998/28)**

(54) **VERFAHREN UND VORRICHTUNG ZUR HERSTELLUNG EINER MEHRSCHICHTIGEN FLÄCHIGEN POLYMERMEMBRAN**

METHOD AND DEVICE FOR PRODUCING A MULTILAYER SHEET-LIKE POLYMER MEMBRANE

PROCEDE ET DISPOSITIF DE PRODUCTION D'UNE MINCE MEMBRANE POLYMERE MULTICOUCHE

(84) Benannte Vertragsstaaten:
**AT BE CH DE FR GB LI NL**

(30) Priorität: **07.01.1997 DE 19700232**

(43) Veröffentlichungstag der Anmeldung:
**27.10.1999 Patentblatt 1999/43**

(73) Patentinhaber: **GKSS-Forschungszentrum Geesthacht GmbH**
**21502 Geesthacht (DE)**

(72) Erfinder:
 • **WEIGEL, Thomas**
  **D-14557 Wilhelmshorst (DE)**
 • **MARTENS, Uwe**
  **D-21522 Hohnstorf (DE)**
 • **ALBRECHT, Wolfgang**
  **D-14513 Teltow (DE)**
 • **RICHAU, Klaus**
  **D-12435 Berlin (DE)**
 • **HILKE, Roland**
  **D-14513 Teltow (DE)**
 • **PAUL, Dieter**
  **D-14532 Kleinmachnow (DE)**
 • **KNEIFEL, Klemens**
  **D-21502 Geesthacht (DE)**
 • **PEINEMANN, Klaus-Viktor**
  **D-21502 Geesthacht (DE)**

(74) Vertreter: **Niedmers, Ole, Dipl.-Phys.**
**Patentanwälte,**
**Niedmers & Seemann,**
**Van-der-Smissen-Strasse 3**
**22767 Hamburg (DE)**

(56) Entgegenhaltungen:
 **DD-A- 138 938        US-A- 2 806 256**
 **US-A- 4 874 568      US-A- 4 963 304**
 **US-A- 5 422 179**

 • **PATENT ABSTRACTS OF JAPAN vol. 009, no. 215 (M-409), 3.September 1985 & JP 60 076323 A (DAINIPPON INSATSU KK), 30.April 1985,**
 • **PATENT ABSTRACTS OF JAPAN vol. 015, no. 427 (M-1174), 30.Oktober 1991 & JP 03 180316 A (HASHIMOTO FORMING IND CO LTD), 6.August 1991,**
 • **PATENT ABSTRACTS OF JAPAN vol. 005, no. 204 (C-085), 24.Dezember 1981 & JP 56 126407 A (NITTO ELECTRIC IND CO LTD), 3.Oktober 1981,**

**Beschreibung**

Die Erfindung betrifft ein Verfahren zur Herstellung einer mehrschichtigen flächigen Polymermembran, bei dem zunächst eine Mehrzahl von Polymerlösungen entsprechend der Anzahl der Schichten hergestellt werden, sowie eine Vorrichtung gemäß dem Oberbegriff des Patentanspruchs 9.

Bei dem im Stand der Technik bekannten Prinzip zur Herstellung von flächigen Polymermembranen wird eine Polymerlösung mit Hilfe eines Ziehkastens, eines Rakels oder eines Spaltes auf eine feste Unterlage aufgebracht und anschließend durch Lösungsmittelausdunstung oder gegebenenfalls nach Durchlaufen einer Abdunststrecke, in ein flüssiges Koagulationsmedium gegeben, wo die Polymermembran koaguliert wird. Ein Herstellungsverfahren dieser Art ist z.B. in "E. Staude, Membranen und Membrantrennprozesse, Grundlagen und Anwendungen, VHC Verlagsgesellschaft mbH, Weinheim 1992" beschrieben worden. Dabei kann entweder der Ziehkasten über die feste Unterlage oder auch die feste Unterlage (Metallband, Metalltrommel und/oder Vlies) unter dem Ziehkasten bewegt werden.

Prinzipiell müßte es somit unter Anwendung des vorbeschriebenen bekannten Verfahrens möglich sein, unter Anwendung eines Doppelziehkastens oder Doppelrakels das Verfahren derart durchzuführen, daß eine Verbundmembran, auch in mehrschichtiger Ausführung, realisiert werden könnte.

Bei einer anderen Vorrichtung zur Herstellung einer flächigen Polymermembran wird ein sog. Druckgießer verwendet. Diese Vorrichtung weist einen Schlitz in einer festen Platte auf, durch den die Polymerlösung extrudiert wird. Die Extrusion erfolgt unmittelbar oder über einen Luftspalt in ein Koagulationsbad. Bei einer speziellen Ausführung dieser bekannten Vorrichtung werden zwei Polymerlösungen gleichzeitig über- oder nebeneinander extrudiert, wobei Zweischichtenmembranen entstehen. Eine derartige Vorrichtung ist in der DD-PS 138 938 beschrieben. Es entstehen bei der bekannten Vorrichtung Zweischichtmembranen, die, je nach Verträglichkeit der verwendeten Polymerlösungen und den angewendeten Bildungsbedingungen, in ihre Einzelbestandteile aufgetrennt werden können oder sie bilden eine Verbundmembran.

Weder mit der zuerst genannten Verfahrensführung noch mit der zuvor genannten Vorrichtung sind flächige Polymermembranen auf rationelle Weise in einem Verfahrensschritt herstellbar, die sich durch hohe durch den Träger vermittelte Festigkeit und gleichzeitig durch einen mehrschichtigen strukturellen Aubau auszeichnen, der zur Abtrennung von gelösten, emulgierten oder gasförmigen Stoffen aus Lösungen, Emulsionen oder Gasen sowie zum selektiven Transport geladener Teilchen geeignet ist.

Es ist somit Aufgabe der vorliegenden Erfindung, ein Verfahren und eine Vorrichtung zur Herstellung einer mehrschichtigen flächigen Polymermembran der eingangs genannten Art zu schaffen, die gestatten, daß eine hochfeste Verbundmembran geschaffen werden kann, bei der Polymerlösungen, die auch unterschiedlich sein können, zu unterschiedlichen Polymerschichten übereinander und/oder nebeneinander in einem Verfahrensschritt aufgebracht werden können, wobei insbesondere die Vorrichtung einen einfachen Aufbau und eine einfache Verfahrensführung zur Ausbildung der mehrschichtigen Polymermembran gestattet.

Gelöst wird die Aufgabe gemäß dem Verfahren dadurch, daß die Polymerlösungen nachfolgend getrennt zu einem vor einer schlitzförmig ausgebildeten Extrusionseinrichtung ausgebildeten Bereich transportiert werden, wo die Polymerlösungen beidseitig flächig auf einen ebenfalls in diesen Bereich transportierten flächigen Träger aufgebracht werden, wobei nachfolgend der Träger mit beidseitig aufgebrachten Polymerlösungen zur Ausbildung der flächigen Polymermembran durch die schlitzförmige Extrusionseinrichtung hindurchgefördert wird.

Der Vorteil des erfindungsgemäßen Verfahrens liegt im wesentlichen darin, daß eine Membran geschaffen wird, mit der in einem Arbeitsgang ein Membranverbund geschaffen wird, bei dem ein Träger, der beispielsweise ein Vlies, ein Gewebe oder ein Gestrick ist, von beiden Seiten mit der Polymerlösung beaufschlagt werden kann, so daß am Ende des Herstellungsverfahrens unter Einschluß des die Festigkeit des Membranverbundes im wesentlichen herstellenden Trägers eine Polymermembran geschaffen wird, bei der der Träger im Membranverbund integriert ist. Die bisherigen bekannten Verfahren gestatteten keine Herstellung einer derart aufgebauten mehrschichtigen Polymermembran.

Vorteilhafterweise wird die aus der Extrusionseinrichtung austretende Polymermembran in ein Koagulationsmedium geleitet, wobei es vorteilhafterweise möglich ist, das Verfahren so zu führen, daß ein Naßextrusionsprozeß möglich ist, bei dem die austretende Polymermembran direkt in das Koagulationsmedium eintaucht. Prinzipiell ist eine weitere vorteilhafte Verfahrensführung auch derart möglich, daß nach Art eines Trocken-Naß-Extrusionsprozesses die Polymermembran erst nach Durchlaufen einer gewissen Abdunststrecke in einer gasförmigen Atmosphäre in ein flüssiges Koagulationsmedium eingetaucht wird.

Auch kann es vorteilhaft sein, daß nach der Koagulation oder unmittelbar nach dem Austritt der Polymermembran aus der Düseneinrichtung alle nichtmembranbildenden Bestandteile durch Waschen und/oder Extraktion entfernt werden.

Schließlich ist es vorteilhaft, daß die Polymermembran mittels Präparation und/oder Trocknung nachbehandelt wird und so die endgültige Membran fertiggestellt ist und ihrer bestimmungsgemäßen Funktion zugeführt werden kann.

**EP 0 951 379 B1**

Grundsätzlich ist es möglich, den Träger vor dem Beschichtungs- bzw. Auftragvorgang mit Polymerlösungen in unbehandelter Form zuzuführen und mit den Polymerlösungen auf vorbeschriebene Weise zu beschichten bzw. die Polymerlösungen aufzutragen. Es ist vorteilhafterweise aber auch möglich, den Träger, der beispielsweise ein Flächengebilde in Form eines Vlieses, eines Netzes, einer Folie, eines Filters oder eines sonstigen anderen geeigneten Gewebes oder Gestrickes vorliegen kann, vor der Beaufschlagung mit Polymerlösung zu imprägnieren. Dadurch wird beispielsweise eine Verbesserung der Haftung der Polymerlösungsschichten bzw. der Polymerschichten zur gezielten Einflußnahme auf die Strukturbildung an der Grenzfläche zwischen Polymerlösung und Träger erreicht.

Als Imprägnierungsmittel eignet sich vorzugsweise eine Flüssigkeit bzw. eignen sich Flüssigkeiten, die Lösungsmittel für die die Polymerschichten bildenden Polymere sind bzw. Flüssigkeiten, die vorzugsweise mit den Polymerlösungen chemisch und/oder physiko-chemisch reagieren.

Eine Vorrichtung zur Herstellung einer mehrschichtigen flächigen Elements, umfassend ein Extrusionswerkzeug mit einer Mehrzahl von Zufuhrkanälen für die Schichten sowie eine schlitzförmig ausgebildete Extrusionsdüse, wobei in einem Bereich vor Eintritt in die Extrusionsdüse eine schlitzförmige Zufuhröffnung für die Zufuhr eines Trägers mündet, auf den von seinen beiden Trägerseiten die von den Zufuhrkanälen zugeführten Schichten aufbringbar sind, ist aus der JP-A-60 076323 bekannt.

Die bekannte Vorrichtung ist derart aufgebaut, daß aus einer Mehrzahl geschmolzener Harze ein mehrschichtiger flächiger Körper hergestellt werden kann. Die bekannte Vorrichtung umfaßt ein Extrusionswerkzeug mit einer Mehrzahl von Zufuhrkanälen für die aufgeschmolzenen Harze sowie eine schlitzförmig ausgebildete Extrusionsdüse. In dem Bereich vor dem Eintritt in die Extrusionsdüse mündet eine schlitzförmige Zufuhröffnung für die Zuführung eines Trägers, auf den von seinen beiden Trägerseiten die von den Zufuhrkanälen zugeführten geschmolzenen Harze aufbringbar sind.

Ausgehend von der obigen Aufgabe wird zu deren Lösung vorgeschlagen, daß das mehrschichtige Element eine Polymermembran ist, die aus einer Mehrzahl von Polymerlösungen entsprechend der Anzahl der Schichten hergestellt wird, mit der auch das Verfahren nach einem oder mehreren der Ansprüche 1 bis 9 ausgeführt werden kann, und daß die Zufuhrkanäle, in denen die Polymerlösungen zugeführt werden, sich schlitzförmig zu der Extrusionsdüse zu dem Bereich verengen, wobei die zugeführten Polymerlösungen und der Träger vor Durchtritt durch die Extrusionsdüse in Form eines Verbundes ausbildbar sind.

Der Vorteil der erfindungsgemäßen Vorrichtung besteht im wesentlichen darin, daß mit dieser auf einfache Weise kontinuierlich die Herstellung einer flächigen, als Verbundmembran aus wenigstens an beiden Seiten eines Trägers angebrachten bzw. aufgebrachten Polymerschichten bestehende flächige Polymermembran möglich ist, wobei auch die Polymerlösungen mittels dieser Vorrichtung gleichmäßig übereinander und sogar nebeneinander schichtbar sind, und wobei die Vorrichtung es zudem gestattet, daß zur einen Seite und zur anderen Seite, auf der die Beschichtung bzw. der Auftrag der Polymerlösung auf dem flächenförmigen Träger erfolgt, die Polymerlösungen unterschiedlich zusammengesetzt sein können. Die in bezug auf ihre Zusammensetzung unterschiedlich ausgebildete Polymerschichten können speziell auf den Verwendungszweck abgestimmt werden. Der Aufbau der Vorrichtung braucht für unterschiedliche Polymerlösungen grundsätzlich nicht verändert zu werden.

Um auch in der Fläche unterschiedliche Zusammensetzungen der Polymerlösungen zuzuführen, ist es vorteilhaft, eine Mehrzahl von Zufuhrkanälen nebeneinander anzuordnen, wobei diese Ausgestaltung natürlich auch dazu dienen kann, für eine gleichmäßige Verteilung der zugeführten Polymeröffnung mit gleicher Zusammensetzung bei großflächig auszubildenden Polymermembranen zu sorgen.

Wie oben schon im Zusammenhang mit der Verfahrensführung angedeutet, kann es zu einer Naßextrusion bzw. zu einer Trocken-Naß-Extrusion gemäß dem Verfahren kommen. Je nach gewünschter Nachbehandlung der aus der schlitzförmigen Extrusionseinrichtung austretenden Polymermembran kann es dabei vorteilhaft sein, die Polymermembran unter einem Winkel im Bereich von 0° bis 80° relativ zur Membranaustrittsrichtung aus der Extrusionsdüse abzuziehen.

Vorzugsweise ist der den Volumenstrom der jeweiligen Polymerlösung bestimmende Druck, mit dem die Polymerlösung durch den jeweiligen Zufuhrkanal zum Aufbringbereich gefördert wird, unterschiedlich einstellbar.

Weiterhin ist es vorteilhaft, daß ebenfalls die Geschwindigkeit, mit der der Träger durch die schlitzförmige Zufuhröffnung zum Aufbringbereich gefördert wird, einstellbar ist, so daß gezielt die Dicke der jeweiligen Polymerschicht und der Grad des angestrebten Verbundes zwischen der Polymerschicht und dem Träger einstellbar sind.

Bestimmend für die Dicke der durch die Vorrichtung ausbildbaren mehrschichtigen flächigen Polymermembran ist auch der Öffnungsquerschnitt der Extrusionsdüse, wobei vorzugsweise der Öffnungsquerschnitt der schlitzförmigen Extrusionsdüse wenigstens in bezug auf die Schlitzhöhe einstellbar ist.

Die Erfindung wird nun unter Bezugnahme auf die nachfolgenden schematischen Zeichnungen anhand eines Ausführungsbeispieles eingehend beschrieben. Darin zeigen:

Fig. 1    in der Seitenansicht eine Extrusionseinrichtung im Schnitt entlang der Linie A - B von Fig. 2 und
Fig. 2    eine Ansicht auf die Darstellung der Extrusionseinrichtung gemäß Fig. 1 von hinten.

Die erfindungsgemäße Vorrichtung besteht im wesentlichen aus einem Extrusionswerkzeug 11, das in dem hier beschriebenen Beispiel zwei schlitzförmig sich zu einer schlitzförmig ausgebildeten Extrusionsdüse 12 verengende Zufuhrkanäle 13, 14 für die Polymerlösungen aufweist. Auf an sich bekannte Weise werden die Polymerlösungen, die identische oder unterschiedliche Zusammensetzung haben können, über die Zufuhröffnungen 19, 20 der Vorrichtung 10 von außen zugeführt, wobei deren Druck wähl- und einstellbar ist. Die sich zu der schlitzförmig ausgebildeten Extrusionsdüse 12 hin verengenden Zufuhrkanäle 13, 14 münden in einen Bereich 15 im Inneren der Vorrichtung 10 vor dem Eintritt in die Extrusionsdüse 12.

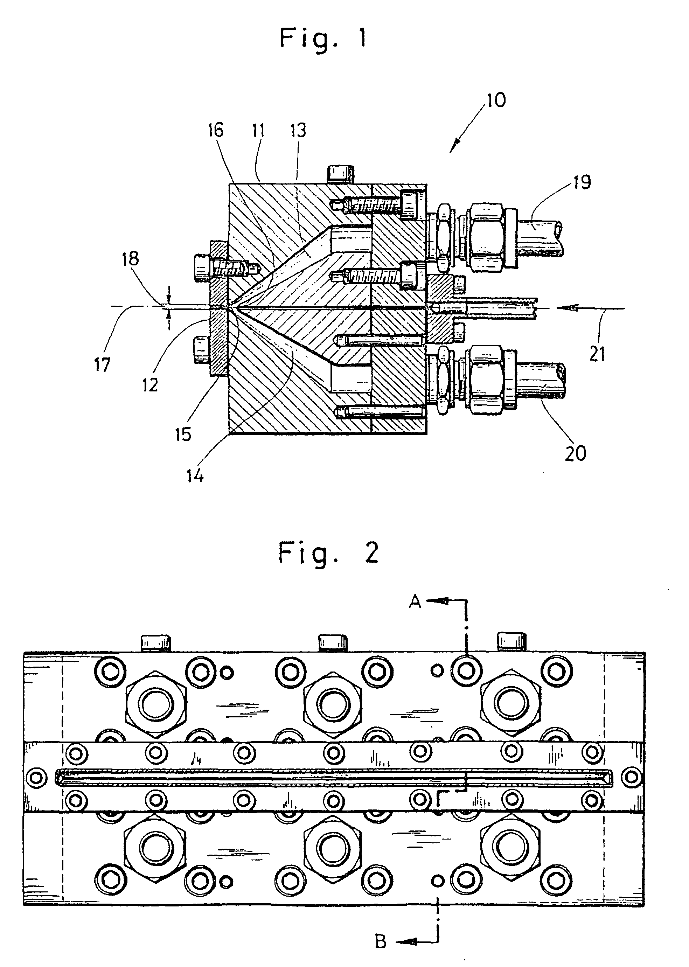

Durch das zentrale Teil der Vorrichtung 10 wird im wesentlichen in Membranaustrittsrichtung 17 ein flächenförmiger Schlitz ausgebildet, durch den ein Träger, der aus einem Vlies, einem Gewebe, einem Gitter oder einem Gestrick oder dergleichen bestehen kann, zugeführt wird. Die Zufuhröffnung 16 für den flächenförmigen Träger mündet ebenfalls in den voraufgeführten Bereich bzw. Auftragbereich 15. Der im Bereich bzw. Auftragbereich 15 gebildete Verbund aus Polymerschichten und Träger, was noch weiter unten im einzelnen beschrieben wird, verläßt in Transportrichtung des Trägers, vergleiche Pfeil 21, die Vorrichtung 10 über ein diesen Austrittsbereich abdeckendes Extrusionswerkzeug 11. Das Extrusionswerkzeug 11 ist längsgeschlitzt ausgebildet, vergleiche auch Fig. 2. Die Schlitzhöhe 18 bestimmt unter anderem die Dicke des innerhalb der Vorrichtung 10 gebildeten Verbundes aus Polymerschichten und Träger bzw. die Dicke der das Extrusionswerkzeug verlassenden Polymermembran. Durch geeignete Wahl der Extrusionsdüse 12, die auswechselbar ist, kann auch durch diese Maßnahme gezielt Einfluß auf die Dicke der die Vorrichtung 10 verlassenden, hier beidseitig eines Trägers mit einer Polymerschicht ausgebildeten zweischichten Polymermembran genommen werden.

Wie aus Fig. 2 ersichtlich ist, kann auch eine Mehrzahl von Zufuhrkanälen nebeneinander angeordnet sein, womit für die Herstellung großflächiger Polymermembranen für eine gleichmäßige Verteilung bzw. ein gleichmäßiges Aufbringen der Polymerlösungen auf den Träger oberhalb und unterhalb, d.h. beidseitig, Rechnung getragen wird. Prinzipiell ist es auch möglich, die parallel nebeneinander angeordneten Zufuhrkanäle auch mit unterschiedlichen Polymerlösungen auf einer Seite des Trägers zu beschicken, so daß in der Fläche der Polymermembran unterschiedliche Membranen mit unterschiedlichen Trenneigenschaften in einem Arbeitsgang ausbildbar sind.

Das Verfahren zur Herstellung der Polymermembran kann mittels der vorangehend beschriebenen Vorrichtung 10 ausgeführt werden. Dazu werden Polymerlösungen, vorzugsweise in einem gemeinsamen Lösungsmittel oder Lösungsmittelgemisch, hergestellt, die beispielsweise Polymerkonzentrationen von 10 bis 50 Ma-% aufweisen. Nachfolgend können die Polymerlösungen filtriert und entgast werden. Dann werden die Polymerlösungen der Vorrichtung 10 über die Zuführungen 19 und 20 zugeführt und gelangen in die Zufuhrkanäle 13 und 14. Im Aufbringbereich 15 in der Vorrichtung werden die Polymerlösungen auf einen ebenfalls in den Aufbringbereich 15 über die Zufuhröffnung 16 zugeführten Träger beidseitig aufgebracht und unter gleichzeitigem Transport des Trägers in Richtung des Pfeiles 21 durch die Extrusionsdüse 12 geführt und werden dort entweder in Membranaustrittsrichtung 17, die normalerweise der Transportrichtung 21 entspricht, von der Vorrichtung 10 abgeführt. Grundsätzlich ist es aber möglich, daß die die Extrusionsdüse verlassenden Polymermembran unter einem Winkel von 0° bis 80° relativ zur Membranaustrittsrichtung abgezogen wird.

Die an sich, jedenfalls was ihren Grundaufbau angeht, aus der Extrusionsdüse 12 austretende fertige Polymermembran direkt in ein Koagulationsmedium hineinzuleiten oder erst nach Durchlaufen einer Abdunststrecke darin einzuleiten, hängt von der gewählten Verfahrensführung ab. Schließlich werden dann alle nichtmembranbildenden Bestandteile der Polymermembran und des Koagulationsbades durch Waschen bzw. Extraktion der gebildeten Polymermembran entfernt, wobei gegebenenfalls auch noch eine anschließende Bearbeitung der Polymermembran mit Nachbehandlungsverfahren wie Präparation, Trocknung usw. möglich ist.

Es sei noch darauf hingewiesen, daß als separat einzusetzende Polymerlösungen grundsätzlich alle, wie schon angedeutet, unterschiedliche Zusammensetzungen im Prinzip aller membranbildender Polymere sowie deren Gemische gewählt werden können, entweder gelöst in geeigneten gleichen Lösungsmitteln oder Lösungsmittelgemischen. Grundsätzlich ist es auch möglich, daß die über den einen Zufuhrkanal 13 zugeführte Polymerlösung identisch mit der über den Zufuhrkanal 14 zugeführten Polymerlösung ist. Es ist aber möglich, die unterschiedlichen Polymere sich lediglich in den Molmassen, der Polymerlösungskonzentration und/oder den Lösungsmitteln bzw. Lösungsmittelgemischen und/oder der Temperatur unterscheiden zu lassen. Vorzugsweise werden die beiden Schichten der Membranen aus solchen gleichartigen oder unterschiedlichen Polymeren gebildet, bei denen eine Polymerschicht insbesondere aus einem Polymer mit kationischer Ladung und die andere Polymerschicht insbesondere aus einem Polymer mit anionischer Ladung besteht.

Als Koagulationsmittel können alle Flüssigkeiten, Flüssigkeitsgemische bzw. Lösungen dienen, die in bezug auf die jeweils eingesetzten Polymerlösungen einen Fällpunkt $\gamma$ von kleiner oder gleich 0,5 (gemessen durch Trübungstitration an 4 Ma.-%igen Polymerlösungen) aufweisen. Vorzugsweise werden jedoch Wasser, Gemische aus Wasser und Alkoholen, Wasser und Lösemittel(gemisch) bzw. Gemische aus Wasser, Alkohol und Lösemittel(gemisch) eingesetzt. Der Fällpunkt $\gamma$ des Fällmediums wird hierbei unter Verwendung 4 Ma.-%igen Lösungen der als Membranbildner eingesetzten Polymere nach der Relation:

$\gamma$ = Verbrauch an Koagulationsmittel [ml] / (Verbrauch an

Koagulationsmittel [ml] + vorgelegte Lösung des Polymers

[ml]) ermittelt.

Die Abzugsgeschwindigkeit, die Fördermenge der Polymerlösungen, die Dicke bzw. Porosität des verwendeten flächenförmigen Trägers, (Vlies, Filter, Netz, Folie usw.) sowie die Spaltbreite und - höhe 18 der Extrusionsdüse 12 abgestimmt. Im Falle der Imprägnierung des flächenförmigen Trägers gilt:

$$v_{Abzug} = \frac{V_{PLA} + V_{PLB}}{(B_D \cdot D_D - B_D \cdot D_{FG})}$$

Im Falle der Nichtimprägnierung des flächenförmigen Trägers gilt:

$$v_{Abzug} = \frac{V_{PLA} + V_{PLB}}{(B_D \cdot D_D - \in \cdot B_D \cdot D_{EG})}$$

Hierbei bedeuten:

$v_{Abzug}$ - Abzugsgeschwindigkeit [cm/s]
$V_{PLA}$ - Volumenstrom der Polymerlösung A [cm$^3$/s]
$V_{PLB}$ - Volumenstrom der Polymerlösung B [cm$^3$/s]
$B_D$ - Breite des Düsenschlitzes [cm]
$D_D$ - Höhe des Düsenschlitzes [cm]
$D_{FG}$ - Dicke des Flächengebildes, Vlies, Filter, Netz, Folie o.a. [cm]
$\in$ - Volumenporosität des Flächengebildes, Vlies, Filter, Netz, Folie o.a.

Der Einsatz der erfindungsgemäßen Vorrichtung 10 ermöglicht die Herstellung von Verbundmembranen in einem kontinuierlichen Prozeß in einem Verfahrensschritt sowohl nach einem Naßextrusionsprozeß (Mehrkomponentenbreitschlitzdüse taucht direkt in das Koagulationsmedium ein) als auch nach einem Trocken-Naß-Extrusionsprozeß (der Verbund, bestehend aus erster Polymerlösung, flächenförmigen Träger und zweiter Polymerlösung wird erst nach Durchlaufen einer gewissen Abdunststrecke in einer gasförmigen Atmosphäre in das flüssige Koagulationsmedium eingetaucht).
Bei Verwendung untereinander unverträglicher, d.h. geeignet auswählbarer Polymerlösungen, lassen sich die nach dem erfindungsgemäßen Verfahren hergestellten Polymermembranen, beispielsweise nach einer Phaseninversion, in zwei Einzelmembranen auftrennen, die jede für sich verwendbar sind, wobei der Träger sich dann entweder in einer Einzelmembran oder in keiner Membran befindet.
Im folgenden soll die Erfindung an Beispielen näher ausgeführt werden:

1. Beispiel

Polyacrylnitril mit einem mittleren Molekulargewicht von Mw=1,2 * 10$^5$ g/mol wird 2h bei 80°C unter Rühren (1400 U/min) in N.-Methlypyrrolidon gelöst, so daß eine 15.5 Ma.-%ige Polymerlösung entsteht. Im Anschluß daran wird die Polymerlösung filtriert und entgast. Diese Polymerlösung wird sowohl als die separat eingesetzte erste Polymerlösung als auch als zweite Polymerlösung verwendet. Als Träger wurde ein 0,2 mm starkes Vlies eingesetzt. Der Polymerlösungverbund wurde durch eine "Trokkenstrecke" von 0,5 m geführt und anschließend im Koagulationsmedium Wasser bei 25° C gefällt. Der Polymerlösungsverbund wurde in einem Winkel von 0°, bezogen auf die Austrittsrichtung, von der Extrusionsdüse 12 abgezogen. Des weiteren wurde folgende Parameter angewendet.

$v_{Abzug}$ - 4 [cm/s]
$V_{PLA}$ - 1,2 [cm$^3$/s]
$V_{PLB}$ - 1,2 [cm$^3$/s]
$B_D$ - 20,0 [cm]
$D_D$ - 0,05 [cm]

Doe Charakterisierung der resultierenden Membran wurde bei einem Transmembrandruck von 0,5 bar vorgenommen.

Die resultierende Membran besitzt folgende Eigenschaften:

| | |
|---|---|
| Wasserpermeabilität - | 54,5 [l/hm$^2$] |
| Mittlerer Porendurchmesser - | 3,1 [nm] |
| Porendurchmesser Cut off - | 9,6 [nm] |
| Porendichte - | 2,6 * 10$^{10}$ [Anzahl/cm$^2$] |
| Oberflächenporosität - | 1,9 * 10$^{-3}$ |
| Relativer Leistungsparameter (Tweddle) - | 1,4 * 10$^{23}$ [m$^{-3}$] |

Bezugszeichenliste

| | |
|---|---|
| 10 | Vorrichtung |
| 11 | Extrusionswerkzeug |
| 12 | Extrusionsdüse |
| 13 | Zufuhrkanal |
| 14 | Zufuhrkanal |
| 15 | Bereich / Aufbringbereich |
| 16 | Zufuhröffnung |
| 17 | Membranaustrittrichtung |
| 18 | Schlitzhöhe |
| 19 | Zuführung |
| 20 | Zuführung |
| 21 | Pfeil (Transportrichtung) |

**Patentansprüche**

1. Verfahren zur Herstellung einer mehrschichtigen flächigen Polymermembran, bei dem zunächst eine Mehrzahl von Polymerlösungen entsprechend der Anzahl der Schichten hergestellt werden, **dadurch gekennzeichnet, daß** die Polymerlösungen nachfolgend getrennt zu einem vor einer schlitzförmig ausgebildeten Extrusionseinrichtung ausgebildeten Bereich transportiert werden, wo die Polymerlösungen beidseitig flächig auf einen ebenfalls in diesen Bereich transportierten flächigen Träger aufgebracht werden, wobei nachfolgend der Träger mit den beidseitig aufgebrachten Polymerlösungen zur Ausbildung der flächigen Polymermembran durch die schlitzförmige Extrusionseinrichtung hindurchgefördert wird.

2. Verfahren nach Anspruch 1, **dadurch gekennzeichnet, daß** die aus der Extrusionseinrichtung austretende Polymermembran in ein Koagulationsmedium geleitet wird.

3. Verfahren nach Anspruch 1, **dadurch gekennzeichnet, daß** die aus der Extrusionseinrichtung austretende Polymermembran vor Eintritt in ein Koagulationsmedium längs einer Abdunststrecke geführt wird.

4. Verfahren nach einem oder mehreren der Ansprüche 1 bis 3, **dadurch gekennzeichnet, daß** nachfolgend alle nichtmembranbildenden Bestandteile durch Waschen und/oder Extraktion entfernt werden.

5. Verfahren nach einem oder mehreren der Ansprüche 1 bis 4, **dadurch gekennzeichnet, daß** die Polymermembran mittels Präparation und/oder Trocknung nachbehandelt wird.

6. Verfahren nach einem oder mehreren der Ansprüche 1 bis 5, **dadurch gekennzeichnet, daß** der Träger vor Aufbringung der Polymerlösungen imprägniert wird.

7. Verfahren nach Anspruch 6, **dadurch gekennzeichnet, daß** das Imprägnierungsmittel ein Lösungsmittel für die die Schichten der Polymermembran bildenden Polymere ist.

8. Verfahren nach Anspruch 6, **dadurch gekennzeichnet, daß** das Imprägnierungsmittel ein Medium ist, das mit

**EP 0 951 379 B1**

den Polymerlösungen chemisch und/oder physiko-chemisch reagiert.

9. Vorrichtung zur Herstellung eines mehrschichtigen flächigen Elements, umfassend ein Extrusionswerkzeug (10) mit einer Mehrzahl von Zufuhrkanälen (13, 14) für die Schichten sowie eine schlitzförmig ausgebildete Extrusionsdüse (12), wobei in einen Bereich (15) vor Eintritt in die Extrusionsdüse (12) eine schlitzförmige Zufuhröffnung (16) für die Zufuhr eines Trägers mündet, auf den von seinen beiden Trägerseiten die von den Zufuhrkanälen (13, 14) zugeführten Schichten aufbringbar sind, **dadurch gekennzeichnet, daß** das mehrschichtige Element eine Polymermembran ist, die aus einer Mehrzahl von Polymerlösungen entsprechend der Anzahl der Schichten hergestellt wird, mit der auch das Verfahren nach einem oder mehreren der Ansprüche 1 bis 9 ausgeführt werden kann und daß die Zufuhrkanäle (13, 14), in denen die Polymerlösungen zugeführt werden, sich schlitzförmig zu der Extrusionsdüse (12) zu dem Bereich (15) verengen, wobei die zugeführten Polymerlösungen und der Träger vor Durchtritt durch die Extrusionsdüse (12) in Form eines Verbundes ausbildbar sind.

10. Vorrichtung nach Anspruch 9, **dadurch gekennzeichnet, daß** eine Mehrzahl von Zufuhrkanälen (13, 14) nebeneinander angeordnet ist.

11. Vorrichtung nach einem oder beiden der Ansprüche 9 oder 10, **dadurch gekennzeichnet, daß** die die Extrusionsdüse (12) verlassende Polymermembran unter einem Winkelbereich von 0° bis 80° relativ zur Membranaustrittsrichtung (17) aus der Extrusionsdüse (12) abziehbar ist.

12. Vorrichtung nach einem oder mehreren der Ansprüche 9 bis 11, **dadurch gekennzeichnet, daß** der Druck, mit dem die Polymerlösung durch den Zufuhrkanal (13, 14) zum Aufbringbereich (15) gefördert wird, einstellbar ist.

13. Vorrichtung nach einem oder mehreren der Ansprüche 9 bis 12, **dadurch gekennzeichnet, daß** die Geschwindigkeit, mit der der Träger durch die schlitzförmige Zufuhröffnung (16) zum Aufbringbereich (15) gefördert wird, einstellbar ist.

14. Vorrichtung nach einem oder mehreren der Ansprüche 9 bis 13, **dadurch gekennzeichnet, daß** der Öffnungsquerschnitt der schlitzförmigen Extrusionsdüse (12) in bezug auf die Schlitzhöhe (18) einstellbar ist.

## Claims

1. Method for manufacturing a multi-layer sheet-like polymer membrane in which a plurality of polymer solutions corresponding to the number of layers is manufactured first of all, **characterized in that** the polymer solutions are afterwards conveyed separately to a region constructed upstream of an extrusion device constructed in the shape of a slot, where the polymer solutions are applied in a sheet-like manner to both sides of a sheet-like support which is also conveyed in this region, whereby afterwards the support with the polymer solutions applied to both surfaces is transported through the slot-shaped extrusion device to form the sheet-like polymer membrane.

2. Method according to Claim 1, **characterized in that** the polymer membrane emerging from the extrusion device is passed into a coagulation medium.

3. Method according to Claim 1, **characterized in that** the polymer membrane emerging from the extrusion device is carried along a flashing-off section before entering into a coagulation medium.

4. Method according to one or more of the Claims 1 to 3, **characterized in that** subsequently all the constituents not forming the membrane are removed by washing and/or extraction.

5. Method according to one or more of the Claims 1 to 4, **characterized in that** the polymer membrane is aftertreated by preparation and/or drying.

6. Method according to one or more of the Claims 1 to 5, **characterized in that** the carrier is impregnated before applying the polymer solutions.

7. Method according to Claim 6, **characterized in that** the impregnating agent is a solvent for the polymers that form the layers of the polymer membrane.

8. Method according to Claim 6, **characterized in that** the impregnating agent is a medium that reacts chemically and/or physico-chemically with the polymer solutions.

9. Apparatus for manufacturing a multi-layer sheet-like element, comprising an extrusion tool (10) with a plurality of supply channels (13, 14) for the layers together with an extrusion nozzle constructed in the shape of a slot (12), whereby there opens in a region (15) upstream of the entry into the extrusion nozzle (12) a slot-shaped supply aperture (16) to supply a support onto which the layers supplied by the supply channels (13, 14) can be applied from both of its support sides, **characterized in that** the multi-layer element is a polymer membrane manufactured from a plurality of polymer solutions corresponding to the number of layers, with which the method according to one or more of the Claims 1 to 8 can also be carried out, and **in that** the supply channels (13, 14) in which the polymer solutions are supplied narrow in a slot-shaped manner towards the region (15) towards the extrusion nozzle (12), whereby the polymer solutions that are fed in and the support can be constructed in the form of a laminated composite before passing through the extrusion nozzle (12).

10. Apparatus according to Claim 9, **characterized in that** a plurality of supply channels (13, 14) is arranged alongside one another.

11. Apparatus according to one or both of the Claims 9 or 10, **characterized in that** the polymer membrane leaving the extrusion nozzle (12) can be drawn off within an angular range of 0° to 80° relative to the membrane exit direction (17) from the extrusion nozzle (12).

12. Apparatus according to one or more of the Claims 9 to 11, **characterized in that** the pressure with which the polymer solution is conveyed through the supply channel (13, 14) to the application area (15) is adjustable.

13. Apparatus according to one or more of the Claims 9 to 12, **characterized in that** the speed with which the support is conveyed through the slot-shaped supply aperture (16) to the application area (15) is adjustable.

14. Apparatus according to one or more of the Claims 9 to 13, **characterized in that** the aperture cross-section of the slot-shaped extrusion nozzle (12) is adjustable relative to the slot height (18).

**Revendications**

1. Procédé de préparation de membranes polymères fines multicouches, dans lequel on prépare d'abord un certain nombre de solutions polymères correspondant au nombre de couches, **caractérisé en ce que** les solutions polymères sont transportées séparément, successivement, vers une zone formée avant le dispositif d'extrusion en forme de fente, où les solutions polymères sont appliquées sur les deux faces d'un support plan également transporté dans cette zone, où ensuite, le support avec les solutions polymères appliquées sur les deux faces, est accéléré au travers du dispositif d'extrusion en forme de fente.

2. Procédé selon la revendication 1, **caractérisé en ce que** la membrane polymère sortant du dispositif d'extrusion est amenée dans un milieu de coagulation.

3. Procédé selon la revendication 1, **caractérisé en ce que** la membrane polymère sortant du dispositif d'extrusion est conduite, avant l'entrée dans le milieu de coagulation, le long d'un segment de vapeur.

4. Procédé selon l'une ou plusieurs des revendications 1 à 3, **caractérisé en ce qu'**ensuite, tous les constituants ne formant pas membrane sont éliminés pat lavage et/ou extraction.

5. Procédé selon l'une ou plusieurs des revendications 1 à 4, **caractérisé en ce que** la membrane polymère est traitée ensuite par préparation et/ou séchage.

6. Procédé selon l'une ou plusieurs des revendications 1 à 5, **caractérisé en ce que** le support est imprégné avant l'application des solutions polymères.

7. Procédé selon la revendication 6, **caractérisé en ce que** l'agent d'imprégnation est un solvant pour le polymère formant les couches de la membrane polymère.

8. Procédé selon la revendication 6, **caractérisé en ce que** l'agent d'imprégnation est un milieu, qui réagit chimiquement et/ou physico-chimiquement avec les solutions de polymère.

9. Dispositif de préparation d'un élément fin multicouche, comprenant un outil d'extrusion (10) avec une série de canaux d'amenée (13, 14) pour les couches ainsi que une buse d'extrusion en forme de fente (12), où dans une zone (15) avant l'entrée dans la buse d'extrusion (12), débouche un orifice d'amenée en forme de fente (16) pour l'amenée d'un support, sur les deux faces de ce support, les couches amenées par les canaux d'amenée (13, 14) sont applicables, **caractérisé en ce que** l'élément multicouche est une membrane polymère, qui est préparée à partir d'un certain nombre de solutions polymères correspondant au nombre de couches, avec lequel on peut réaliser également, le procédé selon l'une ou plusieurs des revendications 1 à 8 et **en ce que** les canaux d'amenée (13, 14), dans lesquels les solutions polymères sont amenées, se rétrécissent en forme de fente vers la buse d'extrusion (12), vers la zone (15) où les solutions polymères amenées et le support peuvent être formées avant passage dans la buse d'extrusion (12), sous forme d'un composite.

10. Dispositif selon la revendication 9, **caractérisé en ce que** l'on dispose un certain nombre de canaux d'amenée (13, 14) l'un à côté de l'autre.

11. Dispositif selon l'une ou les deux revendications 9 et 10, **caractérisé en ce que** la membrane polymère quittant la buse d'extrusion (12) peut être tirée de la buse d'extrusion (12) avec un angle allant de 0° à 80° par rapport à la direction de sortie de la membrane (17).

12. Dispositif selon l'une ou plusieurs revendications 9 à 11, **caractérisé en ce que** la pression avec laquelle la solution polymère est accélérée dans le canal d'amenée (13, 14) vers la zone d'application (15), est réglable.

13. Dispositif selon l'une ou plusieurs revendications 9 à 12, **caractérisé en ce que** la vitesse avec laquelle le support est accéléré dans l'orifice d'amenée en forme de fente (16) vers la zone d'application, est réglable.

14. Dispositif selon l'une ou plusieurs revendications 9 à 13, **caractérisé en ce que** la coupe transversale de l'ouverture de la buse d'extrusion en forme de fente (12) est réglable concernant la hauteur de la fente (18).

# Fig. 1

# Fig. 2